(19) **Europäisches Patentamt**

**European Patent Office**

**Office européen des brevets**

(11) **EP 1 080 047 B1**

(12) **EUROPEAN PATENT SPECIFICATION**

(45) Date of publication and mention
of the grant of the patent:
**23.08.2006 Bulletin 2006/34**

(51) Int Cl.:
***C03B 37/005*** (2006.01)

(21) Application number: **98934135.9**

(22) Date of filing: **20.04.1998**

(86) International application number:
**PCT/UA1998/000006**

(87) International publication number:
**WO 1999/054261 (28.10.1999 Gazette 1999/43)**

(54) **MINERAL FLAKY FILLER FOR COMPOSITES**

**MINERALISCHER, PLÄTTCHENFÖRMIGER FÜLLSTOFF FÜR KOMPOSITE**

**CHARGE FLOCONNEUSE MINERALE POUR COMPOSITES**

(84) Designated Contracting States:
**AT BE CH CY DE DK ES FI FR GB GR IE IT LI LU
MC NL PT SE**

(43) Date of publication of application:
**07.03.2001 Bulletin 2001/10**

(73) Proprietors:
• **Efanova, Vera Vasilyevna**
**Kiev, 254214 (UA)**
• **Shulyak, Vladimir Nikolayevich**
**08500, Kievskaya obl. Fastov (UA)**

(72) Inventor: **EFANOVA, Vera Vasilyevna**
**254214 Kiev (UA)**

(74) Representative: **von Füner, Nicolai et al
v. Füner Ebbinghaus Finck Hano
Patentanwälte
Postfach 95 01 60
81517 München (DE)**

(56) References cited:
AU-B- 287 514     GB-A- 989 671
RU-C- 2 036 748     RU-C1- 2 036 748
US-A- 4 084 973     US-A- 4 199 336
US-A- 5 201 929     US-A- 5 401 703
US-A- 5 587 010

• **Efanova V.V.Issledovanie Svoistv Novogo
Aktivirovannogo Bazal-Tovogo Napolnitelya
Dlya Pokryty Ekotekhnologii i Resursos-
Berezhenie, Kiev, Naukova Dumka 1993, No. 5,
pages 67-72.**

Remarks:
The file contains technical information submitted after
the application was filed and not included in this
specification

**Description**

This invention relates to a method for producing dispersible flaky materials of uncertain chemical composition, which can be prepared from the minerals containing lower oxides of iron, i.e. basalt, by melting the minerals, breaking-up the melt to produce vitreous hard flakes followed by a chemical modification and incomplete crystallization of the flaky material by thermochemical treatment in an oxidizing atmosphere.

It is well established that such flakes can be used as reactive fillers for various composites (preferably polymerizable composites) in preparing protective and both protective and ornamental coatings featuring high weather- and water resistance (in protecting metal tanks, bridges, offshore drilling platforms, etc.) and/or abrasion resistance (e.g. sludge lines).

As the description of the technical field suggests, the fillers of the type described are in great demand.

Accordingly, such fillers must satisfy a number of requirements that are getting more exact and are not easily combinable. These fillers are desirable to be:

as reactive as possible, the property being determined from at least the surface area and preferably by the presence of the active centers over the surface of such flakes. The active centers constitute a contributory factor in polymerization of oligomeric binders and in establishing chemical interconnection between macromolecules and inorganic components;

as mechanically strong as possible thus providing an appreciable reinforcement in prepared composites even with low concentrations of the flaky fillers;

as chemically stable as possible (specifically corrosion resistant) to ease up storage and the use of the flakes in preparing many types of composites which usually contain corrosive ingredients while in a green state;

commercially available to a variety of customers as a result of large-scale production and low cost.

These requirements taken separately are not too difficult to meet.

US Patent No. 4,363,889 for one discloses a commercially available and somewhat reactive filler for polymerizable composites, prepared as glass flakes of a thickness ranging from 0.5 to 5.0 $\mu$m and from 100 to 400 $\mu$m in diameter or as a mixture of 10 to 70 parts by weight of such flakes and from 10 to 150 parts by weight of flaky metallic pigments.

Glass flakes are extremely breakable and feature low surface reactivity unless subjected to an additional treatment (e.g. vacuum metallization), while metallic flakes of highly developed surface area are not corrosion stable.

Also known in the art are flaky fillers such as micaceous iron oxide pigments (E.Carter, "Micaceous iron oxide pigments in high performance coatings", *Polymer Paint Colour Journal*, 1986, vol.176, No.4164, pp.226, 228, 230, 232, 234). Compared to glass flakes, they are more durable and chemically stable.

However, such fillers are costly, that is why their use is advisable in applying protective coatings only to such articles and structures where the costs of failure are substantially higher than those of protecting arrangements.

It is, therefore, believed that one of the most preferable ways of providing flaky fillers intended mainly for use in polymer composites is to use flakes produced from natural minerals.

And the present inventor has been involved as a joint originator in developing a technological package including:

a process for the production of finely-dispersed flakes (USSR Pat. No. 1,831,856),
an apparatus for producing finely-dispersed flakes (USSR Pat. No. 1,823,293),
a method of heat treatment of finely-dispersed flakes and an apparatus for carrying out the method (RU Pat. No. 2,036,748).

USSR Pat. No. 1,831,856 discloses a mineral flaky filler produced by melting basalt and dispersing the melt to produce ellipsoidal flakes. Microscopically analyzed for their shape and dimensions, the flakes are characterized, in terms of the ratio between the minor and the major axes of an ellipse, by a distorsion from the circular shape within 0.80 and 0.95.

Such flakes remain in the vitreous state and are chemically unstable specifically due to the presence of lower oxides of iron inherent in basalt (and wind-blown sands) used as a raw material. These flakes have low chemical activity as well.

USSR Pat. No. 1,823,293 teaches the manufacture of a mineral flaky filler by substantially the same process and this filler compared with the above-described one is more acceptable as regards its particle size, namely, it contains up to 99% of flakes of substantially identical form and size. However, these flakes again remain in the vitreous state and are chemically unstable, and have low chemical activity.

These disadvantages are noticeably eliminated in the mineral flaky filler according to RU 2036748 corning closest to that obtained according to the method of the present invention.

This filler is produced by melting a starting mineral (basalt), shaping hard vitreous flaky particles from the melt and by subjecting such particles to thermochemical treatment in an oxidizing atmosphere until a substantially crystal structure is developed. The thermochemical treatment includes heating vitreous particles at the rate of 40 to 190°C/min to a temperature of 600 to 950°C and simultaneously air blowing for 5 to 30 min followed by induced cooling at the rate of at least 950°C/min. The mineral flaky filler treated as above contains substantially no Fe0 and exhibits high (at least 3 g/cm$^3$) density which is higher than that of vitreous particles by the factor 1.5, higher percentage (up to 53% by weight) of a crystal phase (hereinafter "crystallinity") and noticeable amounts of chemically active paramagnetic centers (hereinafter PMC).

These advantages have provided for an appreciable improvement in the properties of polymerizable composites reinforced with the described mineral flakes and of protective and ornamental coatings produced therefrom (Vesselovsky R. A., V.V.Yefanova, I.P.Petukhov, "Study of physico-chemical, thermodynamic and mechanical properties of interface layers in cross-linked polymers". *Mechanics of Composites*, 1994, vol.30, No.5, pp.3-11; in Russian -

Веселовский Р.А., Ефанова В.В., Петухов И.П. Исследование физико-химических, термодинамических и механических свойств граничных слоёв сетчатых полимеров//Механика композитных материалов,

1994, Т. 30, N° 5, с. 3-11).

Subsequently, it was however found that this filler has no more than 6x10$^{19}$ spin/cm$^3$ of PMC that are active in the process of polymerizing mono- and oligomers (V.V. Yefanova. "Study of the properties of a new activated basalt filler for coating applications". *Ecotechnology* and *Saving of Resources*, 1993, No:S, pp.67-72; in Russian-

Ефанова В.В. Исследование свойств нового активированного базальтового наполнителя для покрытий//Экотехнологии и ресурсосбережение,

1993, N°5, с. 67-72). To put it otherwise, the cristallinity mentioned above and chemical activity of the prior art filler are not in balance.

Moreover, the present inventor's unpublished experimental findings have proved that the quest for higher cristallinity of the mineral flaky filler is not justified on account of process efficiency as well. For example, the flakes subjected to thermochemical treatment for 30 minutes at temperatures close to the smallest value of the indicated temperature range, i.e. slightly higher than 600°C, show neither detectable cristallinity nor a detectable increase in chemical activity, while an increase in the treatment time over 30 min results in a decrease in the product output. A change-over to a relatively short-run (about 5 to 10 min) thermochemical treatment at about 900°C or still higher has been surprisingly found open to uncontrolled revitrification and a decrease in the chemical activity of the particles to be more readily percieved the higher are both the temperature of heating the particles and the rate of cooling the heat-treated particles. And finally, the rate of heating vitrified particles, prior to exposure thereof to a gaseous oxidant such as air, has appeared to virtually have no effect on the progress and result of the treatment. Consequently, use of additional process instrumentation will unjustifiably increase the cost of the end product.

Therefore, the technical problem underlying the present invention is to provide a basalt flaky filler for composites wherein, by way of improving operating conditions of the thermochemical treatment of the vitreous particles and subsequent cooling thereof, cristallinity and chemical activity would be significantly closer to balance, compared with the prior-art fillers, could be commercially available and, as used in polymerizable composites, would provide for more durable protective and ornamental or abrasion-resistant coatings.

To this end the invention consists in a method for producing a basalt flaky filler for composites, the method comprises the steps of:

a) obtaining hard vitreous flakes by crushing basalt to sizes suitable for charging a melting furnace, heating the charge to obtain a thin melt, and breaking up a stream of the melt flowing through a heated die into hard vitreous flakes by a whirler and/or an airstream; b) thermochemical treatment of the hard vitreous flakes from step (a) in an oxidizing atmosphere at a temperature from 680 to 850° C until an incomplete crystallisation, i. e. at least 12% by weight of the crystal phase and at least $7 \times 10^{19}$ spin/cm$^3$ of reactive paramagnetic centres are developed, and followed by air cooling, and then c) additional mechanical treatment of said flakes by fragmentation and separation according to the size until at least 30% of the particles with a mean size of about 100 $\mu$m across to the total amount of the particles and at least $14 \times 10^{19}$ spin/cm$^3$ of reactive paramagnetic centres are obtained.

The filler thus produced is mechanically strong due to an adequate degree of crystallization and, owing to the congruity of the crystallinity with the chemical activity, it can be used as a highly effective means of upgrading the quality of mainly thick (>1, and typically >3 mm) protective, ornamental, and abrasion-resistant coatings by the use of preferably such binders that are produced under polymerization of mono- and/or oligomers.

It should be mentioned here that production costs were reduced due to a reduction in an investment in the heating, cooling, and control equipment as well as in the costs of power for the thermochemical treatment and for preparing and feeding the coolant. The end product is therefore commercially more readily available.

The filler obtained according to the present method is preferred for use with polymerizable composites.

The invention is further explained by way of general description and specific data of the experimentation on the method of producing a basalt flaky filler for polymerizable composites, including the values of physico-chemical properties obtained, examples of how the filler is used in polymerizable composites for application as protective coatings, and results of comparative tests on the composites for applying such coatings.

Generally, the method of producing the basalt flaky filler of the invention comprises the steps of:

(1) obtaining hard vitreous particles (usually as flakes) by:

crushing basalt to sizes suitable for charging a melting furnace,
heating the charge to obtain a thin melt (specifically, to a temperature of 1400-1500°C),
breaking up a stream of the melt flowing through a heated die into vitreous particles as by a whirler and/or an airstream);

(2) thermochemical treatment of the vitreous particles from step (1) in an oxidizing atmosphere (preferably in air) at temperatures from 680 to 850°C (preferably 680-780°C) until an incomplete crystallization, i.e. at least 12% by weight of the crystal phase, and at least $7 \times 10^{19}$ spin/cm$^3$ of reactive PMC are developed, and followed by air cooling; and then

(3) mechanical treatment of the particles, e.g. fragmentation and separation according to size, until a basalt flaky filler containing at least 30% of particles with a mean size of about 100 $\mu$m across to the total amount of the particles and at least $14 \times 10^{19}$ spin/cm$^3$ of reactive PMC is obtained.

In the production of hard vitreous flakes, use was made of basalt containing about 10% FeO from the Kostopol deposits (Ukraine). The crushed stone of 5 to 40 mm in size was melted in a modified melting furnace similar to a quartz-glass furnace, in which heat is supplied by gas burners. The melt was heated to a temperature of 1400-1450°C to be extruded through a heated die of heat-resistant steel in a stream of 8 to 10 mm in diameter. The stream of the melt was broken up in a stream of cooling air by a whirler generally heated to about 1300°C.

The flakes obtained were colored gray, about 3 $\mu$m thick and from 25 $\mu$m to predominantly 3 mm in size across. The flakes were carefully (to avoid breaking up or compacting) poured over underpans of heat-resistant steel in loose layers from 80 to 100 mm thick, placed into a muffle furnace, and subjected to thermochemical treatment in air at successive temperatures of 660, 680, 750, 850, and 875° C for 90, 60, 30, 20, and 15 minutes, respectively, and then removed from the furnace and cooled to room temperature in air.

Samples of the flakes treated at above temperatures were analysed for crystallinity and the PMC by conventional methods.

Crystallinity X was defined by the formula

$$X = \frac{d_{tp} - d_{vp}}{d_{cp} - d_{vb}} * 100\%$$

where

$d_{tp}$ is the density of the particles after treatment,
$d_{vp}$ is the density of the vitreous particles,

$d_{cp}$ is the density of the crystal phase,

$d_{vb}$ is the density of the vitreous body of the particles,

substituting density values defined in xylene into the formula (G.A.Rashin, N.A.Polkovoi "Certain physicotechnical properties of stoneware defined", *Glass and Ceramics*", No. 10. 1963, pp.11-14 - in Russian:

Рашин Г.А., Полковой Н.А. "Определение некоторых физико-технических свойств каменного литья" в журнале "Стекло и керамика",

1963. N° 10, c. 11-14).

The PMC were counted from electron paramagnetic resonance (EPR) spectra in a basalt filler and diphenylpicrylhydrazine, the latter being a reference substance ("Electron Paramagnetic Resonance" *An Abridged Chemical Encyclopedia*. V, Moscow: Soviet Encyclopedia, pp.961-968 - in Russian:

статья "Электронный парамагнитный резонанс" в "Краткой химической энциклопедии", т.5, M: Изд-во "Советская энциклопедия",

c.961-968). The EPR-spectra were obtained from the model E/x-2547 radio spectrometer commercially available from RADIOPAN (Poland).

The analysis findings are summarized in Table 1.

Table 1

CRYSTALLINITY AND PARAMAGNETIC CENTERS VS. TREATMENT TEMPERATURE

| Indicators* | Treatment temperatures, °C | | | | |
|---|---|---|---|---|---|
| | 660 | 680 | 750 | 850 | 875 |
| Crystallinity,% by wt. | 5.8 | 14.8 | 35.2 | 52.3 | 49.8 |
| PMC, $10^{19}$ spin/cm$^3$ | 5.8 | 16 | 18 | 19 | 17 |

*Note: the respective indicators would constitute 0.0% and <2.0*$10^{19}$ spin/cm$^3$ for vitreous particles prior to the thermochemical treatment and 51.5% and about 6.0*$10^{19}$ spin/cm$^3$ for closest prior art particles after thermochemical treatment at 900°C, when essentially all FeO has changed to $Fe_2O_3$.

As will be seen from Table 1, thermochemical treatment of the vitreous particles at temperatures below 680°C is not practicable since both crystallinity and PMC increase but significantly, nor it is practicable at temperatures above 850° C because crystallinity and PMC begin, though insignificantly, to be adversely affected.

Following thermochemical treatment, the basalt flaky filler was crushed and separated according to the particle size to thereby enchance reactivity of the filler. The experiments were performed on the particles treated at 750°C. Samples containing various proportions of particles with a mean size of about 100 $\mu$m across were prepared and the number of PMC was determined. The results of the experiments are shown in Table 2.

Table 2

PARAMAGNETIC CENTERS VS. MEAN PARTICLE SIZE ACROSS IN SAMPLES

| | Particles with mean size across <100 $\mu$m, % | | | | | |
|---|---|---|---|---|---|---|
| | 5.0 | 10.0 | 20.0 | 30.0 | 40.0 | 80.0 |
| PMC, $10^{19}$ spin/cm$^3$ | 90 | 210 | 280 | 370 | 560 | 630 |

To assess the effect of the basalt flaky filler obtained according to the method of the invention on the physicomechanical properties of polymerizable composites, standard samples were prepared. These were used in determining the adhesive strength (measured'as a force required to separate a steel mushroom-like piece from the coating applied to a support also made of steel), the compressive strength, the tensile strength, the modulus of elasticity in lateral flexure, and the impact strength per unit area. Similar samples of the prior art filler were also prepared and used in concurrent tests (the methods and equipment for running such tests are well known to those skilled in the art).

In the above tests, the filler obtained according to the method of the invention (hereinafter referred IF) has been prepared by the thermochemical treatment at 680° C prior to crushing and classification and therefore having the lowest crystallinity and PMC counts, while the closest prior art filler (hereinafter referred PF) was prepared at 900°C and had crystallinity and the PMC counts close to maximum. A relatively simple mixture of acrylic monomers containing polymeric additives and an initiator of polymerization, which are listed in the left column of Table 3, were used as a binder for experimental cold polymerizable composites.

Table 3
COMPOSITION OF EXPERIMENTAL POLYMERIZABLE COMPOSITES

| Ingredients | Applicable standards or specifications | Amount, parts by wt. |
|---|---|---|
| Methyl methacrylate | GOST 20370-74 | 100 |
| Polybutyl methacrylate | TU 6-01-358-75 | 20 |
| Polyvinyl chloride | OST 6-01-37-88 | 20 |
| Polyisocyanate | TU 113-03-29-6-84 | 15 |
| Benzoyl peroxide* | GOST 2168-83 | 10* |
| Dimethyl aniline | GOST 14888-78 | 3 |
| IF, or | | 10 |
| PF | | 10 |

*Note: benzoyl peroxide is used in a paste form as a mixture with dimethyl phthalate in approximate ratio by weight of 1:1.

The ingredients were proportioned, methyl methacrylate, polybutyl methacrylate and polyvinyl chloride premixed, then one of the fillers was introduced, with stirring the mix, polyisocyanate and dimethyl aniline added (again with stirring), and lastly benzoyl peroxide was introduced. After a thorough mixing, the compositions were shaped in a conventional way into as many samples as required to obtain data on the physicomechanical properties of the composites, the mean square deviation being +/-5%.

The findings are summarized in Table 4.

Table 4
COMPARISON OF SAMPLES TESTED

| | Filler | |
|---|---|---|
| Properties | IF | PF |
| Adhesive strength, MPa | 42 | 27 |
| Compressive strength, MPa | 92.0 | 72.0 |
| Tensile strength, MPa | 14.0 | 9.2 |
| Modulus of elasticity in lateral flexure, MPa | 36.4 | 28.5 |
| Impact strength, $kJ/m^2$ | 17.3 | 14.2 |

As can be seen from Table 4 the basalt flaky filler obtained according to the method of the invention is more efficient compared with the prior art filler.

The industrial applicability of the basalt flaky filler stems from above-disclosed in connection with both possible large-scale production and wide application.

**Claims**

1. A method for producing a basalt flaky filler for composites, the method comprises the steps of:

   a) obtaining hard vitreous flakes by crushing basalt to sizes suitable for charging a melting furnace, heating the charge to obtain a thin melt, and breaking up a stream of the melt flowing through a heated die into hard vitreous flakes by a whirler and/or an airstream;
   b) thermochemical treatment of the hard vitreous flakes from step (a) in an oxidizing atmosphere at a temperature from 680 to 850° C until an incomplete crystallisation, i. e. at least 12% by weight of the crystal phase and at least $7x10^{19}$ spin/cm$^3$ of reactive paramagnetic centres are developed, and followed by air cooling, and then
   c) additional mechanical treatment of said flakes by fragmentation and separation according to the size until at least 30% of the particles with a mean size of about 100 $\mu$m across to the total amount of the particles and at least $14x10^{19}$ spin/cm$^3$ of reactive paramagnetic centres are obtained.

2. The method according to claim 1, **characterized in that** said thermochemical treatment of the vitreous flakes is carried out in air at a temperature from 680 to 780°C.

**Patentansprüche**

1. Verfahren zur Herstellung eines Basaltflockenfüllers für Verbundstoffe, das die Stufen der

   a) Herstellung harter glasartiger Flocken durch Brechen von Basalt bis zu einer Größe, die für die Beschickung eines Schmelzofens geeignet ist, Erwärmung der Charge bis zur Erzielung einer dünnen Schmelze und Zerkleinerung eines Stroms der Schmelze, die durch eine erwärmte Düse fließt, unter Bildung harter glasartiger Flocken mit Hilfe einer Verwirbelungsvorrichtung und/oder eines Luftstroms,
   b) thermomechanischen Behandlung der harten glasartigen Flocken von Stufe a) in einer oxidierenden Atmosphäre bei einer Temperatur von 680 bis 850°C bis zu einer unvollständigen Kristallisation, d.h. bei wenigstens 12 Gew.-% der kristallinen Phase und wenigstens $7x10^{19}$ Spins/cm$^3$ an reaktiven paramagnetischen Zentren unter nachfolgender Luftkühlung und
   c) zusätzlichen mechanischen Behandlung der Flocken durch Zerlegung und Auftrennung, bis wenigstens 30 % der Teilchen eine durchschnittliche Größe von ca. 100 $\mu$m, bezogen auf die Gesamtmenge an Teilchen, aufweisen und wenigstens $14x10^{19}$ Spins/cm$^3$ an reaktiven paramagnetischen Zentren erhalten werden, umfasst.

2. Verfahren nach Anspruch 1, **dadurch gekennzeichnet, dass** die thermomechanische Behandlung der glasartigen Flocken an der Luft bei einer Temperatur von 680 bis 780°C durchgeführt wird.

**Revendications**

1. Procédé de production d'une charge floconneuse de basalte pour composites, le procédé présentant les étapes :

   a) de production de flocons vitreux durs par broyage de basalte à des tailles appropriées pour charger un four de fusion, de chauffage de la charge de manière à obtenir une masse fondue fluide et de dispersion d'un flux de masse fondue s'écoulant à travers une filière chauffée en flocons vitreux durs par un cyclone et/ou un flux d'air ;
   b) de traitement thermochimique des flocons vitreux durs de l'étape (a) dans une atmosphère oxydante à une température de 680 jusqu'à 850°C jusqu'à une cristallisation incomplète, c'est-à-dire un développement d'au moins 12% en poids de phase cristalline et d'au moins $7x10^{19}$ spins/cm$^3$ de centres paramagnétiques réactifs, suivi d'un refroidissement à air, puis
   c) de traitement mécanique supplémentaire desdits flocons par fragmentation et séparation en fonction de la taille jusqu'à ce qu'on obtienne au moins 30% des particules avec une taille moyenne d'environ 100 $\mu$m parmi la quantité totale de particules et au moins $14x10^{19}$ spins/cm$^3$ de centres paramagnétiques réactifs.

2. Procédé selon la revendication 1, **caractérisé en ce que** ledit traitement thermochimique des flocons vitreux est effectué dans l'air à une température de 680 à 780°C.